# FASCICULE DE BREVET EUROPEEN

(11) **EP 0 567 662 B1**
(45) Date de publication et mention de la délivrance du brevet: **05.03.1997**
(21) Numéro de dépôt: 92107095.9
(22) Date de dépôt: 25.04.1992
(51) Int. Cl.: A23G 1/00, A23L 1/226

(54) **Procédé d'aromatisation d'un chocolat au lait**
Verfahren zur Aromatisierung von Milchschokolade
Process for aromatizing of milk chocolate

(43) Date de publication de la demande: 03.11.1993
(73) Titulaire: SOCIETE DES PRODUITS NESTLE S.A., 1800 Vevey (CH)
(72) Inventeur: Chmiel, Oliver, CH-1006 Lausanne (CH); Traitler, Helmut, CH-1802 Corseaux (CH); Raetz, Eric, 1018 Lausanne (CH)

(56) Documents cités:
- WO-A-90/00016
- WO-A-90/13638
- DE-A- 3 739 700
- FR-A- 2 266 464
- US-A- 1 966 460
- US-A- 2 169 278
- TENSIDE DETERGENTS vol. 13, no. 2, 1976, pages 77 - 82 M. RANNY ET AL 'SYNTHETISCHE PHOSPHOGLYCERIDE'
- PATENT ABSTRACTS OF JAPAN vol. 013, no. 029 23 Janvier 1989
- PATENT ABSTRACTS OF JAPAN vol. 014, no. 562 13 Décembre 1990
- JOURNAL OF THE AMERICAN OIL CHEMISTS' SOCIETY vol. 58, no. 2, 1988, CHAMPAIGN, ILL. pages 886 - 888 W. VAN NIEUWENHUYZEN 'THE INDUSTRIAL USES OF SPECIAL LECITHINS: A REVIEW'
- PATENT ABSTRACTS OF JAPAN vol. 012, no. 198 8 Juin 1988
- DATABASE WPIL Section Ch, Week 9023, Derwent Publications Ltd., London, GB; Class D, AN 90-174669
- PATENT ABSTRACTS OF JAPAN vol. 012, no. 056 19 Février 1988

## Description

La présente invention concerne l'aromatisation d'un chocolat au lait.

Le chocolat au lait est fabriqué à partir d'un mélange brut de chocolat constitué de masse de cacao, de beurre de cacao, de lait et de sucre. Ce mélange est finement broyé et la poudre qui en résulte est raffinée, puis liquéfiée par malaxage dans des conches. Ensuite, la masse de chocolat est tempérée, puis moulée.

Dans un procédé particulier d'application courante, produisant un chocolat au lait d'arôme caramélisé, fruité et non lacté très apprécié des consommateurs, le mélange brut de chocolat est constitué de "crumb", de sucre et de beurre de cacao. On prépare le crumb en traitant thermiquement le lait, en y ajoutant du sucre, en concentrant sous vide, en mélangeant le lait concentré sucré et la masse de cacao, puis en séchant complétement ce mélange sous vide, c'est à dire avec une teneur en eau résiduelle de 1,5% en poids au maximum. Le crumb se présente sous la forme d'une masse dure foncée que l'on broie finement, que l'on met dans des sacs étanches à l'humidité et que l'on entrepose dans un local sec tempéré. Cette masse se conserve longtemps et développe un arôme typique de crumb avec en plus une note lactée après plusieurs mois d'entreposage, produit par auto-lipolyse enzymatique.

On a proposé, par exemple selon US-A-4.081.568 d'accélérer la lipolyse et de la rendre plus constante en ajustant le pH du mélange brut de chocolat entre 6,25 et 6,7 par addition de phosphate trisodique avant séchage.

Selon GB-A-524.466, on a accentué la note butyrique dans une graisse d'aromatisation pour chocolat au lait par lipolyse de crème par une lipase non-spécifique, puis séparation de la phase grasse qui sert d'agent d'aromatisation à incorporer dans le beurre de cacao au cours de la fabrication du chocolat.

On a donc admis jusqu'à présent que les éléments responsables de l'aromatisation, en particulier ceux formés lors de la maturation du crumb, étaient essentiellement les acides gras à chaîne courte.

Nous avons trouvé de manière surprenante un moyen de conférer au chocolat au lait un arôme proche de celui du crumb sans recourir aux fastidieuses et coûteuses fabrication et maturation du crumb.

L'invention concerne donc un procédé d'aromatisation du chocolat au lait, dans lequel on fabrique le chocolat au lait de manière classique à partir de poudre de lait, de sucre, de beurre de cacao et de lécithine, caractérisé par le fait que l'on ajoute en cours de fabrication ou que l'on génère par lipolyse d'un substrat entrant dans la fabrication une quantité d'acide gras libre choisi parmi les acides oléique, linoléique et alpha-linolénique, efficace pour conférer au chocolat un arôme proche de celui obtenu à partir du crumb.

Selon l'invention, on peut ajouter les acides gras libres insaturés mentionnés précédemment à l'état solide par simple mélange à la poudre de lait, à une température en dessous du point de fusion des acides gras. On utilise de préférence 0,4 à 1,2 % en poids d'acide gras.

Alternativement, on peut générer les acides gras libres insaturés précédents par lipolyse d'un substrat qui est un élément constitutif du mélange formant la pâte de chocolat. On entend par là la poudre de lait, entier ou plus ou moins écrémé, par exemple contenant environ 4 à 26 % de matière grasse, ou la lécithine.

Ainsi, on peut effectuer la lipolyse de la poudre de lait avec une lipase spécifique qui oriente préférentiellement la lipolyse vers la production d'acides gras à longue chaîne insaturés objet de la demande de brevet parallèle EP 0 567 830 de la titulaire déposée sous le titre "Lipase modifiée, procédé de modification et utilisations".

Selon une forme préférée du mode de réalisation par lipolyse d'un substrat, on réalise la lyse de lécithine, par exemple de soja par une phospholipase A2, puis l'on détruit la phospholipase par un traitement non chimique, par exemple par l'action d'une protéase, puis l'on inactive la protéase. La lysolécithine peut être mise en oeuvre en remplacement de 20-70% en poids de la lécithine normalement ajoutée dans le procédé classique, soit dans le mélange de départ, soit au niveau du conchage. A cet égard, il est tout à fait surprenant que la lécithine puisse convenir comme agent d'aromatisation puisqu'elle était jusqu'à présent jugée responsable de la formation de mauvaises odeurs indésirables. De plus, il était admis jusqu'à présent dans le domaine technique de la fabrication du chocolat que la lécithine avait exclusivement un rôle physico-chimique de réduction de la viscosité de la pâte de cacao.

Les exemples ci-après illustrent le procédé de l'invention. Dans ces exemples, les pourcentages et parties sont en poids sauf indication contraire.

### Exemples 1-6

On fabrique un chocolat au lait de la manière conventionnelle suivante:
On mélange une masse de 46,5 % de sucre, 6,5 % de poudre de cacao contenant 12 % de beurre de cacao, 18,5 % de beurre de cacao, 22 % de poudre de lait entier à 26 % de matière grasse et 1 % d'huile de beurre (les % sont basés sur le mélange final après conchage). Après raffinage, puis conchage pendant 24h au cours duquel on complète le mélange avec 5,2 % de beurre de cacao et 0,3 % de lécithine, on verse la masse de chocolat dans des moules, on démoule le chocolat et on l'entrepose à 15°C.
Ce chocolat constitue le produit standard de comparaison.

A titre comparatif, on met en oeuvre une méthode d'aromatisation connue d'une poudre de lait consistant en la lipolyse du lait, préalablement à son introduction dans le mélange précédent. Pour ce faire, on traite le lait avec 0,02 U/ml de lipase de Mucor javanicus (MAP-10, AMANO (R)) pendant 30 min à 37°C, après quoi on le sèche par pulvérisation. On utilise la poudre de lait ainsi lipolysée dans la fabrication d'un chocolat au lait comme décrit précédemment.

### Exemple 1:

On mélange à la poudre de lait 0,0225 % d'acide oléique et 0,02 % d'acide linoléique dans une enceinte à -40°C, puis on met en oeuvre comme précédemment la poudre obtenue.

### Exemple 2:

On mélange à la poudre de lait 0,05 % d'acide oléique, 0,05 % d'acide linoléique et 0,01 % d'acide alpha-linolénique dans une enceinte à -40°C, puis on met en oeuvre comme précédemment la poudre obtenue.

### Exemple 3:

On traite 2 g de lécithine de soja avec 4 ml d'une solution de phospholipase A2 (lécithase, NOVO (R)) d'activité 10.000 U/ml en milieu aqueux dont le pH a été ajusté à 9 par la soude 4 N, puis on y ajoute du chlorure de calcium jusqu´à obtenir une concentration 0,4 M dans la solution. On incube la solution 2 h à 55°C sous agitation.
On ajoute ensuite 4 ml d'Alcalase 2,4L ((R), Novo, 2,4 unités d'activité/g), puis on maintient le mélange 1 h à 50°C sous agitation de manière à inactiver la phospholipase.
Enfin, on chauffe le mélange à 75°C et on le maintient à cette température pendant 15 min sous agitation de manière à détruire l'activité protéolytique de la protéase.
On utilise le lysat obtenu en remplacement de 30% de la lécithine mise en oeuvre dans la fabrication du chocolat comme précédemment.

### Exemple 4:

On procède comme à l'exemple 3, sauf que l'on met en oeuvre le lysat en remplacement de 60% de la lécithine utilisée dans la fabrication du chocolat comme précédemment.

### Exemple 5:

On modifie la lipase de Mucor javanicus précédente en mettant 0,2g de lipase en présence de 1g de pectine A (méthylée à raison de 10%) en solution aqueuse de pH 5 sous azote et sous agitation pendant 1h. On sépare ensuite la pectine non dissoute par centrifugation modérée. On neutralise alors la solution à pH 7 par addition d'une base, puis on la sèche par lyophilisation.
On procède à la lipolyse du lait en y ajoutant 0,1 U/ml de la lipase modifiée pendant 30 min à 37°C, puis on le sèche par pulvérisation.
On utilise la poudre lipolysée pour fabriquer du chocolat au lait comme précédemment.
Par extraction de la phase lipidique du lait lipolysé avant son séchage , puis analyse chromatographique des acides gras libres, on constate que la lipase modifiée précédente a la spécificité pour les acides gras à chaîne moyenne et à chaîne longue de la lipase de départ et une spécificité accrue pour les acides gras insaturés de même longueur de chaîne.

### Exemple 6:

On procède à l'évaluation organoleptique des chocolats au lait fabriqués comme indiqué précédemment immédiatement après leur fabrication (A), après trois mois d'entreposage (B) et après sept mois d'entreposage (C) auprès d'un panel de dégustateurs. Les résultats sont les suivants:
(A)
   Le chocolat standard, de bonne qualité, ne possède pas l'arôme de crumb.
   Le chocolat fabriqué à l'aide de la poudre de lait avec lipolyse classique possède au départ un arôme de crumb, mais cet arôme se transforme très rapidement en fort mauvaise odeur et goût caractéristiques de la présence d'acides gras libres à chaîne courte.
   Les chocolats des exemples 1, 2, 3, 4 et 5 présentent un arôme de crumb marqué, sans produire de mauvais goût ou odeur.
(B)
   Après 3 mois d'entreposage, le chocolat standard possède un arôme de crumb, toutefois pas aussi prononcé que ceux que les chocolats des exemples 1, 2, 3, 4 et 5 avaient dès le départ.
   Contre toute attente, les chocolats des exemples 1, 2, 3, 4 et 5 ne présentent pas d'évolution défavorable des propriétés organoleptiques. Le produit de l'exemple 3 présente un goût plus fin et une meilleure texture que celui de l'exemple 4.
   Par ailleurs, la mise en oeuvre de lysolécithine (exemples 3 et 4) présente l'avantage de l'utilisation de bien moindres quantités d'agent d'aromatisation pour atteindre l'arôme de crumb souhaité.
(C)
   Après 7 mois d'entreposage, les chocolats des exemples 1 et 2 présentent sensiblement moins de mauvaises odeurs que le chocolat standard.

## Revendications

1. Procédé d'aromatisation du chocolat au lait, dans lequel on fabrique le chocolat au lait de manière classique à partir de poudre de lait, de sucre, de beurre de cacao et de lécithine, caractérisé par le fait que l'on ajoute en cours de fabrication ou que l'on génère par lipolyse d'un substrat entrant dans la fabrication une quantité d'acide gras libre choisi parmi les acides oléique, linoléique et alpha-linolénique, efficace pour conférer au chocolat un arôme proche de celui obtenu à partir du crumb.

2. Procédé selon la revendication 1, caractérisé par le fait que l'on ajoute les acides gras libres par simple mélange à la poudre de lait à raison de 0,4 à 1,2%, basé sur le poids de la poudre de lait.

3. Procédé selon la revendication 1, caractérisé par le fait que l'on génère les acides gras par lipolyse d'un substrat qui est un élément constitutif du mélange formant la pâte de chocolat avec une lipase spécifique orientant préférentiellement la lipolyse vers la production d'acides gras à longue chaîne insaturés.

4. Procédé selon la revendication 1, caractérisé par le fait que l'on génère les acides gras à partir d'une lécithine à titre de substrat, en la traitant par une phospholipase A2, de manière à en libérer les acides gras à longue chaîne insaturés, puis que l'on détruit la phospholipase en la traitant avec une protéase.

5. Procédé selon la revendication 4, caractérisé par le fait que l'on met en oeuvre le lysat contenant la lysolecithine et les acides gras libèrés en remplacement de 20 à 70% en poids de la lécithine normalement ajoutée dans le procédé classique, soit dans le mélange de départ, soit au niveau du conchage.

## Claims

1. Process for flavouring a milk chocolate, in which the milk chocolate is conventionally manufactured from milk powder, sugar, cocoa butter and lecithin, characterized in that a quantity of free fatty acid selected from oleic acid, linoleic acid and alpha-linolenic acid sufficient to provide the chocolate with a flavour close to that obtained from the crumb is added during manufacture or is produced by lipolysis of a substrate involved in the manufacture.

2. Process according to claim 1, characterized in that the free fatty acids are added by simple mixing with milk powder in a quantity of 0.4 to 1.2 %, based on the weight of milk powder.

3. Process according to claim 1, characterized in that the fatty acids are produced by lipolysis of a substrate which is a constituent element of the mixture forming the chocolate paste with a specific lipase which preferentially orients the lipolysis towards the production of unsaturated long-chain fatty acids.

4. Process according to claim 1, characterized in that the fatty acids are produced from a lecithin as a substrate, by treating it with a phospholipase A2 so as to liberate the unsaturated long chain fatty acids, after which the phospholipase is destroyed by treatment with a protease.

5. Process according to claim 4, characterized in that the lysate containing the lysolecithin and the liberated fatty acids are used to replace 20 to 70 % by weight of the lecithin normally added in the conventional process, either in the starting mixture or at the conching stage.

## Patentansprüche

1. Verfahren zur Aromatisierung von Milchschokolade, bei dem man die Milchschokolade auf klassische Weise ausgehend von Milchpulver, Zucker, Kakaobutter und Lecithin herstellt, dadurch gekennzeichnet, daß man eine Menge einer freien Fettsäure, die aus Ölsäure, Linolsäure und alpha-Linolensäure ausgewählt ist und wirksam ist, der Schokolade ein Aroma zu verleihen, das dem ähnlich ist, das ausgehend von "Crumb" erhalten wird, während der Herstellung zugibt oder durch Lipolyse eines während der Herstellung zugesetzten Substrats erzeugt.

2. Verfahren nach Anspruch 1, dadurch gekennzeichnet, daß man die freien Fettsäuren durch einfaches Vermischen mit dem Milchpulver im Verhältnis von 0,4 bis 1,2%, bezogen auf das Gewicht des Milchpulvers, zugibt.

3. Verfahren nach Anspruch 1, dadurch gekennzeichnet, daß man die Fettsäuren durch Lipolyse eines Substrats, das ein Bestandteil der Mischung ist, die die Schokoladenmasse bildet, mit einer spezifischen Lipase erzeugt, die die Lipolyse bevorzugt in die Richtung einer Produktion von langkettigen ungesättigten Fettsäuren lenkt.

4. Verfahren nach Anspruch 1, dadurch gekennzeichnet, daß man die Fettsäuren ausgehend von Lecithin als Substrat und dessen Behandlung mit einer Phospholipase A2 auf eine solche Weise erzeugt, daß man die langkettigen ungesättigten Fettsäuren freisetzt, wonach man die Phospholipase durch Behandlung mit einer Protease zerstört.

5. Verfahren nach Anspruch 4, dadurch gekennzeichnet, daß man es so durchführt, daß das Lysat, das das Lysolecithin und die freigesetzten Fettsäuren enthält, von 20 bis 70 Gew.-% des Lecithins, das nach dem klassischen Verfahren zugesetzt wird, entweder in der Ausgangsmischung oder auf der Stufe des Conchierens ersetzt.
